# EUROPEAN PATENT SPECIFICATION

(11) **EP 3 309 977 B1**
(45) Date of publication and mention of the grant of the patent: **11.11.2020**
(21) Application number: 16810886.8
(22) Date of filing: 23.05.2016
(51) Int. Cl.: H04B 10/032, H04J 14/02, H04B 10/079

(54) **OPTICAL NETWORK SYSTEM, OPTICAL LINE TERMINAL, OPTICAL NETWORK UNIT, AND CONTROL METHOD THEREFOR**
OPTISCHES NETZWERKSYSTEM, OPTISCHES LEITUNGSTERMINAL, OPTISCHE NETZWERKEINHEIT UND STEUERUNGSVERFAHREN DAFÜR
SYSTÈME DE RÉSEAU OPTIQUE, TERMINAL DE LIGNE OPTIQUE, UNITÉ DE RÉSEAU OPTIQUE ET PROCÉDÉ DE COMMANDE ASSOCIÉ

(30) Priority: 15.06.2015 CN 201510331291
(43) Date of publication of application: 18.04.2018
(73) Proprietor: ZTE Corporation, Shenzhen, Guangdong 518057 (CN)
(72) Inventor: WANG, Xiaohua, Shenzhen Guangdong 518057 (CN); CHEN, Yan, Shenzhen Guangdong 518057 (CN); OUYANG, Haiming, Shenzhen Guangdong 518057 (CN); ZHANG, Dandan, Shenzhen Guangdong 518057 (CN); ZHANG, Shuang, Shenzhen Guangdong 518057 (CN); CHEN, Xiangrong, Shenzhen Guangdong 518057 (CN); HUANG, Xingang, Shenzhen Guangdong 518057 (CN)
(74) Representative: Deambrogi, Edgardo
(86) International application number: PCT/CN2016/083034
(87) International publication number: WO 2016/202145

(56) References cited:
- EP-A1- 2 675 089
- EP-A1- 2 768 160
- WO-A1-01/15352
- WO-A1-2012/168004
- WO-A1-2014/136264
- WO-A1-2015/060277
- WO-A1-2015/060277
- WO-A1-2015/060325
- CN-A- 103 475 439
- US-A1- 2008 267 628

## Description

### Technical Field

The present application relates to but not limited to the network technology field, in particular to an optical network system, an optical line terminal, an optical network unit, and a control method thereof.

### Background

PON (Passive Optical Network) technology has a development from GPON (Gigabit-Capable PON)/EPON (Ethernet Passive Optical Network) to 10GEPON and XGPON, and has already stepped into a post-10GPON technology researches and product realization stage. ITU-T international standardization organization has already determined TWDM PON (Time-and Wavelength-Division Multiplexed PON, i.e., dense wavelength multiplexed PON) as a main technical solution for a next-generation optical access. TWDM PON can support 4-8 wavelengths, and each wavelength supports 10G TDM (Time-Division Multiplexing) PON, and the system bandwidth can reach more than 40Gbps and current PON coexistence smooth upgrade is supported.

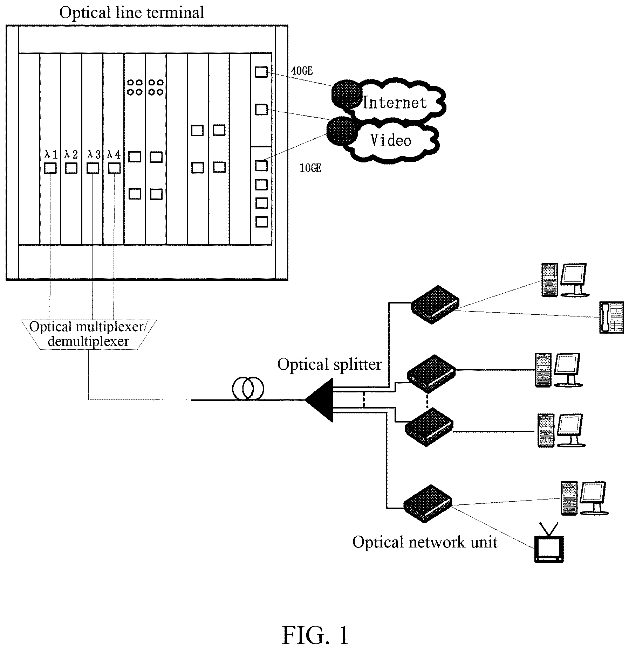

Types of Next-Generation Passive Optical Network (NG-PON2) Optical Line Terminals (OLTs) include a discrete type and a centralized type. All PON ports of a discrete OLT are different wavelength channels which are combined into a trunk optical fiber by using an external optical multiplexer/demultiplexer, and multiple wavelength channels can be aggregated to provide larger bandwidth to users, as illustrated in FIG. 1. However, for a single wavelength channel, bandwidth resources thereof are limited and cannot bear all Optical Network Units (ONUs) under PON ports. When an ONU is registered to be online or needs to be switched to other wavelength channels due to the problem of a current wavelength channel, a selection needs to be made between other several wavelength channels. When a selected new wavelength channel is not suitable, a reselection needs to be made and thereby the influence of interruption of services is great. Especially for some high-priority important users who are often more sensitive to interruption of services, thus a technology is needed to be capable of decreasing time of interruption of services during wavelength channel switching as much as possible.

The features of the preamble of the independent claims are known from WO 2015/060277 A1. Related technologies are known from WO 2014/136264 A1 and US 2008/0267628 A1.

### Summary

The following is a summary of the subject described in detail in this document. This summary is not used for limiting the protective scope of the claims.

The present document provides an optical network system, an optical line terminal, an optical network unit and a control method thereof according to appended independent claims, to solve the problem that the influence of interruption of services is great when an optical network unit performs wavelength channel switching in the related art. Further improvements and embodiments are provided in the dependent claims.

Also provided is an optical network unit control method, including:
an optical line terminal sets a protection wavelength channel for a target optical network unit, and reserves a corresponding network resource for the target optical network unit on the protection wavelength channel; and
the optical line terminal sends information about the protection wavelength channel to the target optical network unit after the target optical network unit is online, such that the target optical network unit performs switching on the protection wavelength channel when wavelength channel switching needs to be performed.

In an exemplary embodiment, the optical line terminal sets two protection wavelength channels for the target optical network unit, and
after the two protection wavelength channels are set, the optical network unit control method further includes:
when the target optical network unit is online, the optical line terminal controls the target optical network unit to be online on one of the protection wavelength channels;
or,
after the target optical network unit is online, and when a wavelength channel on which the target optical network unit is located at current is not a protection wavelength channel, the optical line terminal controls the target optical network unit to be switched to one of the protection wavelength channels.

In an exemplary embodiment, the step that the optical line terminal sets the protection wavelength channel for the target optical network unit includes:
the optical line terminal selects one wavelength channel from multiple wavelength channels of the optical line terminal, and when judging that current remaining network resources of the wavelength channel satisfy a demand of the target optical network unit, the optical line terminal selects the wavelength channel as a protection wavelength channel; and otherwise, the optical line terminal selects a next wavelength channel for judgment, or kicks off at least one online non-target optical network unit from the wavelength channel or switches at least one online non-target optical network unit on the wavelength channel to other wavelength channels, and then makes a judgment again.

In an exemplary embodiment, the network resource includes a bandwidth resource and/or a quality of service network resource.

In an exemplary embodiment, the optical network unit control method further includes:
the optical line terminal receives a protection wavelength channel abnormality message fed back by the target optical network unit; and
when all protection wavelength channels are abnormal, the optical line terminal re-sets at least one protection wavelength channel for the target optical network unit.

In an exemplary embodiment, the optical network unit control method further includes:
after the optical line terminal re-sets at least one protection wavelength channel for the target optical network unit, switching the target optical network unit to a new protection wavelength channel.

Also provided is an optical network unit control method, including:
a target optical network unit receives information about a protection wavelength channel sent by an optical line terminal after the target optical network unit is online, and the information about the protection wavelength channel contains information about the protection wavelength channel set by the optical line terminal for the target optical network unit, a corresponding network resource is reserved for the optical network unit on one or each of multiple protection wavelength channels; and
the target optical network unit performs switching on the protection wavelength channel when wavelength channel switching needs to be performed.

In an exemplary embodiment, the optical network unit control method further includes:
the target optical network unit sends a protection wavelength channel abnormality message to the optical line terminal when the protection wavelength channel is abnormal.

In an exemplary embodiment, the target optical network unit sends the protection wavelength channel abnormality message to the optical line terminal through an optical network unit management and control interface.

In an exemplary embodiment, the optical network unit control method further includes:
the target optical network unit is switched to a common wavelength channel when all protection wavelength channels are abnormal.

Also provided is an optical network unit control method. The optical network unit control method includes:
an optical line terminal sets a protection wavelength channel for a target optical network unit, and reserves a corresponding network resource for the target optical network unit on one or each of multiple protection wavelength channels;
the target optical network unit is online;
the optical line terminal sends information about the protection wavelength channel to the target optical network unit; and
the target optical network unit performs switching on the protection wavelength channel when wavelength channel switching needs to be performed.

Also provided is a computer-readable storage medium, storing computer-executable instructions, which, when executed, implement any optical network unit control method above mentioned.

Also provided is an optical line terminal. The optical line terminal includes a setting module and a sending module.

The setting module is configured to set at least two protection wavelength channels for a target optical network unit. Herein, a corresponding network resource is reserved for the target optical network unit on one or each of multiple protection wavelength channels.

The sending module is configured to send information about the protection wavelength channels to the target optical network unit after the target optical network unit is online, such that the target optical network unit performs switching on the protection wavelength channel when wavelength channel switching needs to be performed.

In an exemplary embodiment, the optical line terminal further includes a control module.

The control module is configured to, after the setting module sets the protection wavelength channels for the target optical network unit, and when the target optical network unit is online, control the target optical network unit to be online on the protection wavelength channel;
or,
after the target optical network unit is online, and when the wavelength channel on which the target optical network unit is located at current is not a protection wavelength channel, control the target optical network unit to be switched to the protection wavelength channel.

Also provided is an optical network unit, including a receiving module and a switching module.

The receiving module is configured to receive information about a protection wavelength channel sent by an optical line terminal after the optical network unit is online. Herein, the information about the protection wavelength channel contains information about the protection wavelength channel set by the optical line terminal for the target optical network unit, and a corresponding network resource is reserved for the optical network unit on the protection wavelength channel.

The switching module is configured to perform switching on the protection wavelength channel when wavelength channel switching needs to be performed.

Also provided is an optical network system, including the optical line terminal and the optical network unit.

By adopting the optical network system, the optical line terminal, the optical network unit and the control method thereof provided by embodiments of the present invention, the optical line terminal sets protection wavelength channels for the target optical network unit, herein corresponding network resources are reserved for the target optical network unit on the set protection wavelength channels; and then the optical line terminal sends information about the protection wavelength channels to the target optical network unit after the target optical network unit is online, such that the target optical network unit can perform switching directly on the protection wavelength channel on which the network resource is reserved for the target optical network unit when wavelength channel switching needs to be performed. Therefore, the switching success can be guaranteed to a greater extent, and the time of interruption of services during wavelength channel switching can be decreased as much as possible and thus the influence on services is reduced.

After the drawings and detailed description are read and understood, other aspects can be understood.

### Brief Description of Drawings

FIG. 1 illustrates a TWDM PON topological diagram.
FIG. 2 illustrates a flowchart of an optical network unit control method provided by embodiment one of the present invention.
FIG. 3 illustrates a structural schematic diagram of an optical network system provided by embodiment two of the present invention.
FIG. 4 illustrates a structural schematic diagram of an optical line terminal provided by embodiment two of the present invention.
FIG. 5 illustrates a structural schematic diagram of an optical network unit provided by embodiment two of the present invention.
FIG. 6 illustrates a flowchart of a target optical network unit control method provided by embodiment three of the present invention.
FIG. 7 illustrates a flowchart of a common optical network unit control method provided by embodiment three of the present invention.

### Detailed Description

Embodiments of the present invention will be described below with reference to the drawings. It needs to be stated that the embodiments in the present application and various mode in the embodiments may be mutually combined under a situation of no conflict.

The solution provided by embodiments is applicable to the technical field of the passive optical network, in particular to the technical field of the next-generation passive optical network (NG-PON2). The optical line terminal in embodiments of the present invention sets a protection wavelength channel for the target optical network unit, herein a corresponding network resource is reserved for the target optical network unit on the protection wavelength channel, such that the target optical network unit can perform switching directly on the protection wavelength channel on which the network resource is reserved for the target optical network unit when wavelength channel switching needs to be performed. Therefore, the success for switching can be guaranteed to a greater extent, and the time of interruption of services during wavelength channel switching can be decreased.

### Embodiment one

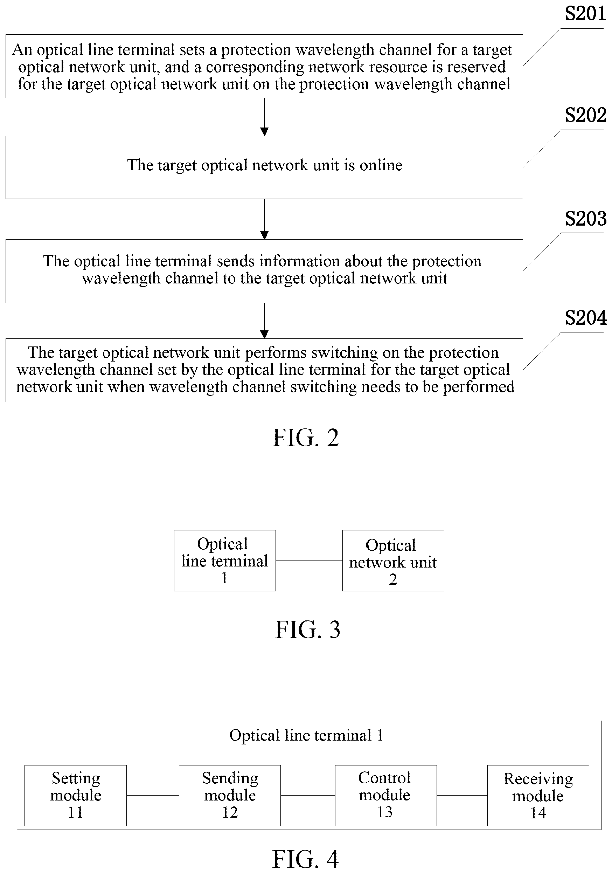

As shown in FIG. 2, an optical network unit control method provided by this embodiment includes the following steps 201-204.

In step 201, an optical line terminal sets a protection wavelength channel for a target optical network unit, and a corresponding network resource is reserved for the target optical network unit on the protection wavelength channel.

The network resource reserved on the protection wavelength channel will not be occupied by other optical network units, and thus it can be guaranteed that the target optical network unit has enough available resources on the protection wavelength channel to use. In this embodiment, the network resource may include but not limited to a bandwidth resource and/or a Quality of Services (QOS) network resource.

In addition, a selection rule of the target optical network unit in this embodiment may be set according to actual application scenarios. For example, each optical network unit may be set as a target optical network unit, or setting of the target optical network unit may also be performed according to priorities, that is, optical network units with priorities higher than a certain priority threshold may be set as target optical network units, and optical network units with priorities lower than the priority threshold may be set as common optical network units.

In the wavelength channels in this embodiment, other channels except the protection wavelength channels may be set as common wavelength channels.

In step S202, the target optical network unit is online.

In step S203, the optical line terminal sends information about the protection wavelength channel to the target optical network unit to notify the target optical network unit which wavelength channels are protection channels thereof.

The optical line terminal may send the information about the protection wavelength channel to the target optical network unit through a standard Physical Layer Operations, Administration and Maintenance (Physical Layer OAM) message. Of course, other message interaction mechanisms with optical network units may also be selected to send the information about the protection wavelength channel.

In step 204, the target optical network unit performs switching on the protection wavelength channel set by the optical line terminal for the target optical network unit when wavelength channel switching needs to be performed. Since on the protection wavelength channel corresponding network resources are reserved for the target optical network unit, switching is successful under normal situations, thereby the switching speed can be improved, and the switching time can be decreased and the influence of interruption of services can be decreased.

In this embodiment, the optical line terminal may set two protection wavelength channels for the target optical network unit, and the two protection wavelength channels form mutual protection therebetween. Of course, to further improve the reliability, three or more than three protection wavelength channels may also be set. Two protection wavelength channels are set in this embodiment as an example, and a management process for the situation that three or more than three protection wavelength channels is similar to the management process of two protection wavelength channels, and thus it is not repetitively described here.

In this embodiment, when the target optical network unit is online, the optical line terminal may control the target optical network unit to be online on one of at least two protection wavelength channels.

In this embodiment, when the target optical network unit is online, the optical line terminal may also not designate the target optical network unit to be online on the protection wavelength channel but may let the target optical network unit select the wavelength channel. And after the target optical network unit is online, when it is judged that the wavelength channel on which the target optical network unit is located is not a protection wavelength channel, the target optical network unit may be controlled to be switched to one of the protection wavelength channels, to avoid the waste of the reserved resources and improve the utilization rate of the resources.

In this embodiment, when the optical line terminal sets protection wavelength channels for the target optical network unit, the optical line terminal may select one wavelength channel from multiple wavelength channels of the optical line terminal, and when it is judged that current remaining network resources of the wavelength channel satisfy a demand of the target optical network unit, the wavelength channel may be selected as a protection wavelength channel. Otherwise, a next wavelength channel may be selected for judgment, or at least one online non-target optical network unit is kicked off from the wavelength channel or at least one non-target optical network unit on the wavelength channel is switched to other wavelength channels, and then a judgment is made again. Of course, in this embodiment, when the protection wavelength channel is selected, in addition to the above-mentioned resource remaining situation, other factors may also be considered for setting, which are not repetitively described here.

In this embodiment, when finding that the protection wavelength channel is abnormal in a switching process or a process of being online, the target optical network unit may send a protection wavelength channel abnormality message to the optical line terminal. The target optical network unit may send the protection wavelength channel abnormality message to the optical line terminal through an optical network unit management and control interface (omci) message format. The omci message format may be self-defined by the target optical network unit. After the optical line terminal receives the protection wavelength channel abnormality message fed back by the target optical network unit, the optical line terminal may know which protection wavelength channel is abnormal.

In this embodiment, when all protection wavelength channels are abnormal, the target optical network unit may be switched to a common wavelength channel, and at this moment, on the common wavelength channel resources, such as bandwidth resources and QOS resources, are not reserved for the target optical network unit, and thereby the target optical network unit still needs to contend for resources with other optical network units according to a sequence of online. Of course, the resources may also be contended for according to other rules such as priorities.

In this embodiment, when the optical line terminal judges that all protection wavelength channels are abnormal according to the received protection wavelength channel abnormality message, at least one protection wavelength channel may be re-set for the target optical network unit. In an exemplary embodiment, two protection wavelength channels may be also set for the target optical network unit. After the protection wavelength channels are re-set for the target optical network unit, the optical line terminal may switch the target optical network unit from the common wavelength channel to the new protection wavelength channel again.

### Embodiment two

As shown in FIG. 3, an optical network system provided by this embodiment includes an optical line terminal 1 and an optical network unit 2. As shown in FIG. 4, the optical line terminal 1 includes a setting module 11, a sending module 12, a control module 13 and a receiving module 14.

The setting module 11 is configured to set at least two protection wavelength channels for a target optical network unit. Corresponding network resources are reserved for the target optical network unit on one or each of multiple protection wavelength channels. Herein, the network resources reserved on the protection wavelength channel will not be occupied by other optical network units, and thus it can be guaranteed that the target optical network unit has enough available resources on the protection wavelength channel to use. In this embodiment, the network resources may include but not limited to bandwidth resources and/or Quality of Services (QOS) network resources.

In addition, a selection rule of the target optical network unit in this embodiment may be set according to actual application scenarios. For example, each optical network unit may be set as a target optical network unit, and setting of the target optical network unit may also be performed according to priorities, that is, optical network units with priorities higher than a certain priority threshold may be set as target optical network units, and optical network units with priorities lower than the priority threshold may be set as common optical network units.

The sending module 12 is configured to send information about the protection wavelength channels to the target optical network unit after the target optical network unit is online, such that the target optical network unit performs switching on the protection wavelength channel when wavelength channel switching needs to be performed. The sending module 12 may send the information about the protection wavelength channel to the target optical network unit through a standard PLOAM message. Of course, other message interaction mechanisms with optical network units may also be selected to send the information about the protection wavelength channel.

In this embodiment, the setting module 11 may set two protection wavelength channels for the target optical network unit, and the two protection wavelength channels form mutual protection therebetween. Of course, to further improve the reliability, three or more than three protection wavelength channels may also be set. Two protection wavelength channels are set in this embodiment as an example, and a management process for the situation that three or more than three protection wavelength channels is similar to the management process of two protection wavelength channels, and thus it is not repetitively described here. When the setting module 11 sets protection wavelength channels for the target optical network unit, the setting module 11 may select one wavelength channel from multiple wavelength channels of the optical line terminal. When it is judged that current remaining network resources of the wavelength channel satisfy a demand of the target optical network unit, the wavelength channel may be selected as a protection wavelength channel. Otherwise, a next wavelength channel may be selected for judgment, or at least one online non-target optical network unit is kicked off from the wavelength channel or at least one non-target optical network unit on the wavelength channel is switched to other wavelength channels, and then a judgment is made again. Of course, in this embodiment, when the protection wavelength channel is selected, in addition to the above-mentioned resource remaining situation, other factors may also be considered for setting, which are not repetitively described here.

The control module 13 is configured to, after the setting module 11 sets the protection wavelength channels for the target optical network unit, and when the target optical network unit is online, control the target optical network unit to be online on the protection wavelength channel;
or,
after the target optical network unit is online, and when the wavelength channel on which the target optical network unit is located at current is not a protection wavelength channel, control the target optical network unit to be switched to the protection wavelength channel.

The receiving module 14 is configured to receive the protection wavelength channel abnormality message sent by the target optical network unit, such that the receiving module 14 may know which protection wavelength channel is abnormal. The setting module 11 may also be configured to, when all protection wavelength channels are abnormal, re-set at least one protection wavelength channel for the target optical network unit. In an exemplary embodiment, two protection wavelength channels may be set for the target optical network unit. After the setting module 11 re-sets the protection wavelength channels for the target optical network unit, the control module 13 may switch the target optical network unit from the common wavelength channel to the new protection wavelength channel again.

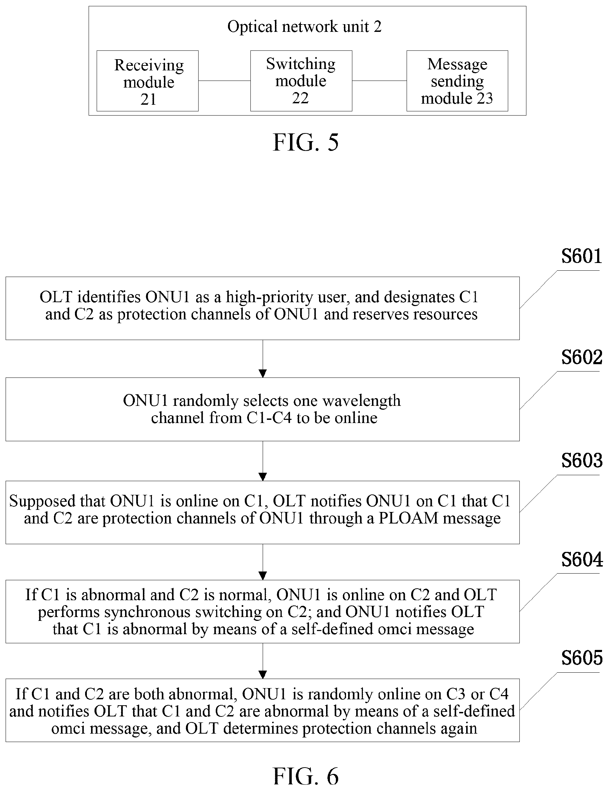

Please referring to FIG. 5, the optical network unit 2 in this embodiment includes a receiving module 21, a switching module 22 and a message sending module 23.

The receiving module 21 is configured to receive information about protection wavelength channels sent by an optical line terminal 1 after the optical network unit is online.

The switching module 22 is configured to perform switching on the protection wavelength channel set by the optical line terminal 1 when wavelength channel switching needs to be performed. Since on the protection wavelength channels corresponding network resources are reserved for the target optical network unit, switching is successful under normal situations, thereby the switching speed can be improved, and the switching time can be decreased and the influence of interruption of services can be decreased.

The message sending module 23 is configured to, when the protection wavelength channel is abnormal, send a protection wavelength channel abnormality message to the optical line terminal 1. Herein, the protection wavelength channel abnormality message may be sent to the optical line terminal 1 through an optical network unit management and control interface (omci) message format. The omci message format may be self-defined by the message sending module 23. After the optical line terminal 1 receives the protection wavelength channel abnormality message fed back by the target optical network unit, the optical line terminal 1 may know which protection wavelength channel is abnormal.

The switching module 22 may also be configured to, when all protection wavelength channels are abnormal, switch the target optical network unit to a common wavelength channel. At this moment, on the common wavelength channel resources such as bandwidth resources and QOS resources are not reserved for the target optical network unit, and thereby the target optical network unit still needs to contend for resources with other optical network units according to a sequence of online. Of course, the resources may also be contended for according to other rules such as priorities.

It is apparent to one skilled in the art to understand that the above-mentioned modules may be implemented by using general-purpose computing devices, and they may be integrated in a single computing device or distributed on a network consisting of multiple computing devices. In an exemplary embodiment, they may be implemented by using program codes executable for computing devices, thus they may be stored in memory devices and executed by computing devices. Under certain circumstances, the illustrated or described steps may be executed according to a sequence different from the sequence here, or they may be respectively manufactured into integrated circuit modules, or multiple modules or steps thereof may be manufactured into a single integrated circuit module to implement. Therefore, the present invention is not limited to any specific combination of hardware and software.

### Embodiment three

To better understand embodiments of the present invention, the embodiments of the present invention will be further exemplarily described below by taking a specific application scenario as an example.

An Optical Line Terminal (OLT) in this embodiment may distinguish high-priority users from common users by identifying Optical Network Units (ONUs), and may set high-priority ONUs as target ONUs.

To simplify the description, in the example below, it is supposed that the OLT and ONUs have four wavelength channels C1-C4 which can be selected, and two ONUs, ONU1-ONU2, are connected under the OLT, and ONU1 is a high-priority important user and ONU2 is a common user. For the target ONU, as illustrated in FIG. 6, a management process in this example includes the following steps 601-605.

In step 601, OLT identifies ONU1 as a high-priority user and designates C1 and C2 as protection channels of ONU1; and OLT reserves resources such as bandwidth resources and QOS resources for ONU1 on the two protection channels.

In step 602, ONU1 randomly selects one wavelength channel form C1-C4 to be online; and if ONU1 is online just on a non-protection channel C3 or C4, OLT will switch ONU1 to C1 or C2 to guarantee that the reserved bandwidth resources are not wasted.

In step 603, it is supposed that ONU1 is online on C1, OLT notifies ONU1 on C1 that C1 and C2 are protection channels of ONU1 through an NG-PON2 standard "Protection _Control message" PLOAM message.

In step 604, if C1 is abnormal and C2 is normal, ONU1 preferentially selects to be online on C2 and OLT performs synchronous switching on C2; and after ONU1 is online on C2, ONU1 notifies OLT that C1 is abnormal by means of a self-defined omci message (message formats are as shown in Table 1 and Table 2).

In step 605, if C1 and C2 are both abnormal, ONU1 is randomly online on C3 or C4 and notifies OLT that C1 and C2 are abnormal by means of a self-defined omci message (message formats are as shown in Table 1 and Table 2). OLT will not select C1 and C2 as protection channels of ONU1 at a next time, and will designate another two wavelength channels such as C3 and C3 as protection channels of ONU1.

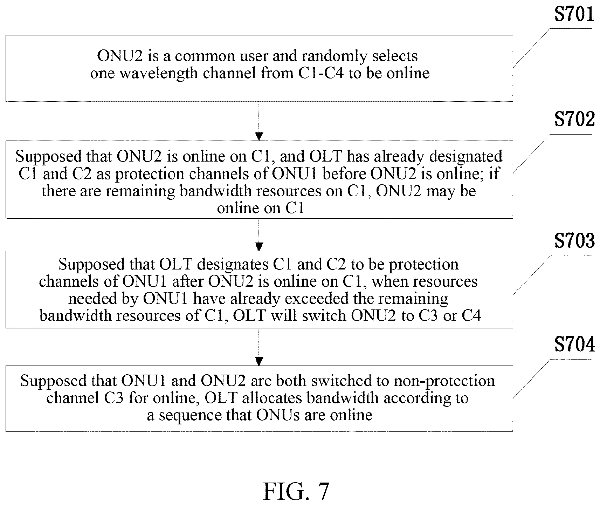

For a common ONU, as illustrated in FIG. 7, a management process in this example includes the following steps 701-704.

In step 701, ONU2 is a common user and may randomly select one wavelength channel from C1-C4 to be online.

In step 702, it is supposed that ONU2 is online on C1, and OLT has already designated C1 and C2 as protection channels of ONU1 before being online and bandwidth resources have already been reserved for ONU1, and if there are remaining bandwidth resources on C1, ONU2 may be online on C1; and if C1 has already reserved all bandwidth resources to ONU1, OLT will switch ONU2 to C3 or C4 to guarantee that bandwidth resources can be allocated to ONU2.

In step 703, it is supposed that ONU2 has already been online on C1 and OLT designates C1 and C2 to be protection channels of ONU1 after ONU2 is online, when resources needed by ONU1 have already exceeded the remaining bandwidth resources of C1, OLT will switch ONU2 to C3 or C4 to preferentially guarantee that bandwidth resources can be allocated to ONU1 on C1.

In step 704, it is supposed that ONU1 and ONU2 are both switched to non-protection channel C3 for online, OLT allocates bandwidth according to a sequence that ONUs are online, i.e., ONU1 does not have a right of being preferentially allocated with bandwidth on a non-protection channel.

Here the definition of a message sent by ONU1 to notify OLT that a protection channel is abnormal is described below: a new self-defined omci managed entity WLCH_PROTECT_STATUS is added, as shown in Table 1.

**Table 1**

| **Number of bytes** | **Field** | **Description** |
|---|---|---|
| 2 | Managed entity class | Standard managed entity for wavelength protection channel status |
| 2 | Managed entity id | ID of standard managed entity for wavelength protection channel status |
| 1 | ACTIVE Protection STATE | CCCC 000T |
| | | CCCC - wavelength protection channel id |
| | | T - wavelength protection channel status |
| | | T = 0: OK |
| | | T = 1: Failed |
| 1 | MATE Protection STATE | CCCC 000T |
| | | CCCC - wavelength protection channel id |
| | | T - wavelength protection channel status |
| | | T = 0: OK |
| | | T = 1: Failed |

It is supposed that field ACTIVE Protection STATE indicates a status of C1 when ONU1 is online on C1. When C1 is abnormal, ONU1 is switched to be online on C2. Since the status of C1 changes, ONU1 notifies OLT through an AVC (Attribute Value Change) message of WLCH_PROTECT_STATUS.

When C2 is also abnormal, ONU1 is automatically switched to be online on C3 or C4. Field MATE Protection STATE indicates a status of C2. When C2 is abnormal, ONU1 is switched to be online on C3. Since the status of C2 changes, ONU1 notifies OLT through an AVC message of WLCH_PROTECT_STATUS. Formats of AVC messages are as shown in Table 2.

**Table 2**

| **Number** | **Attribute value change** | **Description** |
|---|---|---|
| 1 | ACTIVE Protection STATE | Notify OLT when status changes |
| 2 | MATE Protection STATE | Notify OLT when status changes |

Accordingly, it can be seen that OLT in the embodiment of the present invention may set protection wavelength channels for the target ONU and reserve corresponding network resources, such that the target ONU can perform switching directly on the protection wavelength channel on which the network resources are reserved for the target ONU when wavelength channel switching needs to be performed. Therefore, the switching success can be guaranteed to a greater extent and the time of interruption of services during wavelength channel switching can be decreased.

### Embodiment four

An embodiment of the present invention further provides a computer-readable storage medium, storing computer-executable instructions, which, when executed, implement the optical network unit control method.

One ordinary skilled in the art can understand that all or partial steps in the above-mentioned embodiments may be implemented by using a computer program process, and the computer program may be stored in a computer-readable storage medium. The computer program is executed on a corresponding hardware platform (e.g., a system, equipment, an apparatus, a device or a processor), and when being executed, it includes one or combinations of the steps of the method embodiments.

In an exemplary embodiment, all or partial steps in the above-mentioned embodiments may also be implemented by using integrated circuits, and these steps may be respectively manufactured into integrated circuit modules, or multiple modules or steps thereof may be manufactured into a single integrated circuit module to implement.

Each device/function module/function unit in the above-mentioned embodiments may be implemented by adopting a general-purpose computing device, and they may be integrated on a single computing device and may also be distributed on a network consisting of multiple computing devices.

When each device/function module/function unit in the above-mentioned embodiments is implemented by means of software function module and is sold or used as an independent product, it may be stored in a computer-readable storage medium. The above-mentioned computer-readable storage medium may be a read-only memory, a magnetic disk, a compact disk or the like.

One ordinary skilled in the art may understand that modifications or equivalent replacements may be made to the technical solution of the present invention without departing from the rule and scope of the technical solution of the present application. The protective scope of the present application shall be subject to the scope defined by the claims.

### Industrial Applicability

By adopting the optical network system, the optical line terminal, the optical network unit and the control method thereof provided by the embodiments of the present invention, the optical line terminal sets protection wavelength channels for the target optical network unit, herein corresponding network resources are reserved for the target optical network unit on the set protection wavelength channels; and then the optical line terminal sends information about the protection wavelength channels to the target optical network unit after the target optical network unit is online, such that the target optical network unit can perform switching directly on the protection wavelength channel on which the network resources are reserved for the target optical network unit when wavelength channel switching needs to be performed. Therefore, the switching success can be guaranteed to a greater extent, and the time of interruption of services during wavelength channel switching can be decreased as much as possible and thus the influence on services is reduced.

## Claims

1. A method for controlling an optical network unit, **characterized by** comprising:
an optical line terminal setting a protection wavelength channel for a target optical network unit, and reserving a corresponding network resource for the target optical network unit on the protection wavelength channel (S201), wherein an optical network unit with a priority higher than a certain priority threshold is set as the target optical network unit by the optical line terminal; and
the optical line terminal sending information about the protection wavelength channel to the target optical network unit (S203) after the target optical network unit is registered to be online (S202), wherein the target optical network unit performs switching on the protection wavelength channel when there is a need for switching wavelength channel (S204),
wherein the step of the optical line terminal setting the protection wavelength channel for the target optical network unit comprises:
the optical line terminal selecting one wavelength channel from a plurality of wavelength channels of the optical line terminal, and when judging that current remaining network resources of the wavelength channel satisfy a demand of the target optical network unit, selecting the wavelength channel as a protection wavelength channel; otherwise, the optical line terminal selecting a next wavelength channel for the judgment, or the optical line terminal making the judgment again after kicking off at least one online non-target optical network unit from the wavelength channel or switching at least one online non-target optical network unit on the wavelength channel to other wavelength channels.

2. The method according to claim 1, wherein the optical line terminal sets two protection wavelength channels for the target optical network unit, and
after the two protection wavelength channels are set, the method further comprises:
when the target optical network unit is registered to be online, the optical line terminal controlling the target optical network unit to be registered to be online on one of the protection wavelength channels;
or,
after the target optical network unit is registered to be online, and when a wavelength channel on which the target optical network unit is located at current is not a protection wavelength channel, the optical line terminal controlling the target optical network unit to be switched to one of the protection wavelength channels.

3. The method according to any one of claims 1-2, wherein the network resource comprises a bandwidth resource and/or a quality of service network resource.

4. The method according to any one of claims 1-2, wherein the method further comprises:
the optical line terminal receiving a protection wavelength channel abnormality message fed back by the target optical network unit; and
when all protection wavelength channels are abnormal, the optical line terminal re-setting at least one protection wavelength channel for the target optical network unit.

5. The method according to claim 4, wherein the method further comprises:
after the optical line terminal re-sets at least one protection wavelength channel for the target optical network unit, switching the target optical network unit to a new protection wavelength channel.

6. A method for controlling an optical network unit, **characterized by** comprising:
a target optical network unit receiving information about a protection wavelength channel sent by an optical line terminal after the target optical network unit is registered to be online, and the information about the protection wavelength channel contains information about the protection wavelength channel set by the optical line terminal for the target optical network unit, and reserving a corresponding network resource for the optical network unit on one or each of a plurality of protection wavelength channels, wherein an optical network unit with a priority higher than a certain priority threshold is set as the target optical network unit by the optical line terminal; and
the target optical network unit performing switching on the protection wavelength channel when there is a need for switching wavelength channel,
wherein one wavelength channel is selected by the optical line terminal from a plurality of wavelength channels of the optical line terminal, and when it is judged by the optical line terminal that current remaining network resources of the wavelength channel satisfy a demand of the target optical network unit, the wavelength channel is selected as a protection wavelength channel; otherwise, a next wavelength channel is selected by the optical line terminal for the judgment, or the judgment is made again by the optical line terminal after at least one online non-target optical network unit is kicked off from the wavelength channel or at least one online non-target optical network unit on the wavelength channel is switched to other wavelength channels.

7. The method according to claim 6, wherein the method further comprises:
the target optical network unit sending a protection wavelength channel abnormality message to the optical line terminal when the protection wavelength channel is abnormal.

8. The method according to claim 7, wherein the target optical network unit sends the protection wavelength channel abnormality message to the optical line terminal through an optical network unit management and control interface.

9. The method according to any one of claims 6-8, wherein the method further comprises:
the target optical network unit being switched to a common wavelength channel when all protection wavelength channels are abnormal.

10. An optical line terminal (1), **characterized by** comprising:
a setting module (11) configured to set at least two protection wavelength channels for a target optical network unit, wherein a corresponding network resource is reserved for the target optical network unit on one or each of a plurality of protection wavelength channels, wherein an optical network unit with a priority higher than a certain priority threshold is set as the target optical network unit by the setting module; and
a sending module (12) configured to send information about the protection wavelength channels to the target optical network unit after the target optical network unit is registered to be online, wherein a switching on the protection wavelength channel can be performed by the target optical network unit when there is a need for switching wavelength channel,
wherein the setting module is configured to: select one wavelength channel from a plurality of wavelength channels of the optical line terminal, and when it is judged by the setting module that current remaining network resources of the wavelength channel satisfy a demand of the target optical network unit, select the wavelength channel as a protection wavelength channel; otherwise, select a next wavelength channel for the judgment, or make the judgment again by the setting module after at least one online non-target optical network unit from the wavelength channel is kicked off or at least one online non-target optical network unit on the wavelength channel is switched to other wavelength channels.

11. The optical line terminal according to claim 10, wherein the optical line terminal further comprises:
a control module (13) configured to, after the setting module sets the protection wavelength channels for the target optical network unit, and when the target optical network unit is registered to be online, control the target optical network unit to be registered to be online on the protection wavelength channel;
or,
after the target optical network unit is registered to be online, and when the wavelength channel on which the target optical network unit is located at current is not a protection wavelength channel, control the target optical network unit to be switched to the protection wavelength channel.

12. An optical network system, comprising the optical line terminal (1) according to claim 10 or 11 and an optical network unit (2) comprising:
a receiving module (21) configured to receive information about a protection wavelength channel sent by an optical line terminal after the optical network unit is registered to be online, wherein the information about the protection wavelength channel contains information about the protection wavelength channel set by the optical line terminal for the target optical network unit, and a corresponding network resource is reserved for the optical network unit on the protection wavelength channel, wherein an optical network unit with a priority higher than a certain priority threshold is set as the target optical network unit by the optical line terminal; and
a switching module (22) configured to perform switching on the protection wavelength channel when there is a need for switching wavelength channel,
wherein one wavelength channel is selected by the optical line terminal from a plurality of wavelength channels of the optical line terminal, and when it is judged by the optical line terminal that current remaining network resources of the wavelength channel satisfy a demand of the target optical network unit, the wavelength channel is selected as a protection wavelength channel; otherwise, a next wavelength channel is selected by the optical line terminal for the judgment, or the judgment is made again by the optical line terminal after at least one online non-target optical network unit is kicked off from the wavelength channel or at least one online non-target optical network unit on the wavelength channel is switched to other wavelength channels.

## Patentansprüche

1. Verfahren zur Steuerung einer optischen Netzwerkeinheit, **dadurch gekennzeichnet, dass** es umfasst:
dass ein Endgerät für optischer Leitung (Optical Line Terminal, OLT) einen Schutzwellenlängenkanal für eine optische Zielnetzwerkeinheit einstellt, und eine entsprechende Netzwerkressource für die optische Zielnetzwerkeinheit auf dem Schutzwellenlängenkanal (S201) reserviert, wobei eine optische Netzwerkeinheit mit einer Priorität, die höher als ein bestimmter Prioritätsschwellenwert ist, durch das optische Leitungsendgerät als die optische Zielnetzwerkeinheit eingestellt wird; und
das Endgerät für optischer Leitung Informationen über den Schutzwellenlängenkanal an die optische Zielnetzwerkeinheit (S203) sendet, nachdem die optische Zielnetzwerkeinheit als online (S202) registriert ist, wobei die optische Zielnetzwerkeinheit das Umschalten auf den Schutzwellenlängenkanal durchführt, wenn eine Notwendigkeit zum Umschalten des Wellenlängenkanals (S204) besteht,
wobei der Schritt des Endgeräts für optischer Leitung, das den Schutzwellenlängenkanal für die optische Zielnetzwerkeinheit einstellt, umfasst:
dass das Endgerät für optischer Leitung einen Wellenlängenkanal aus einer Vielzahl von Wellenlängenkanälen des Endgeräts für optischer Leitung auswählt, und wenn es urteilt, dass aktuell verbleibende Netzwerkressourcen des Wellenlängenkanals eine Anforderung der optischen Zielnetzwerkeinheit erfüllen, den Wellenlängenkanal als einen Schutzwellenlängenkanal auswählt; andernfalls wählt das Endgerät für optischer Leitung einen nächsten Wellenlängenkanal für die Beurteilung aus, oder das Endgerät für optischer Leitung trifft die Beurteilung erneut, nachdem es mindestens eine optische Online-Nicht-Zielnetzwerkeinheit aus dem Wellenlängenkanal ausgeschlagen oder mindestens eine optische Online-Nicht-Zielnetzwerkeinheit auf dem Wellenlängenkanal auf andere Wellenlängenkanäle umgeschaltet hat.

2. Verfahren nach Anspruch 1, wobei das Endgerät für optischer Leitung zwei Schutzwellenlängenkanäle für die optische Zielnetzwerkeinheit einstellt, und
nachdem die zwei Schutzwellenlängenkanäle eingestellt sind, das Verfahren ferner umfasst:
wenn die optische Zielnetzwerkeinheit als online registriert ist, steuert das Endgerät für optischer Leitung die optische Zielnetzwerkeinheit, die auf einem der Schutzwellenlängenkanäle als online registriert werden soll;
oder,
nachdem die optische Zielnetzwerkeinheit als online registriert ist, und wenn ein Wellenlängenkanal, auf dem die optische Zielnetzwerkeinheit aktuell positioniert ist, kein Schutzwellenlängenkanal ist, steuert das Endgerät für optischer Leitung die optische Zielnetzwerkeinheit dahingehend, dass sie auf einen der Schutzwellenlängenkanäle umgeschaltet wird.

3. Verfahren nach einem der Ansprüche 1-2, wobei die Netzwerkressource eine Bandbreitenressource und/oder eine Dienstgüte-Netzwerkressource umfasst.

4. Verfahren nach einem der Ansprüche 1-2, **dadurch gekennzeichnet, dass** das Verfahren ferner umfasst:
dass das Endgerät für optischer Leitung eine Nachricht über eine Schutzwellenlängenkanalanomalie empfängt, die von der optischen Zielnetzwerkeinheit zurückgemeldet wird; und
wenn alle Schutzwellenlängenkanäle anormal sind, das Endgerät für optischer Leitung mindestens einen Schutzwellenlängenkanal für die optische Zielnetzwerkeinheit erneut einstellt.

5. Verfahren nach Anspruch 4, wobei das Verfahren ferner Folgendes umfasst:
nachdem das Endgerät für optischer Leitung mindestens einen Schutzwellenlängenkanal für die optische Zielnetzwerkeinheit erneut eingestellt hat, Umschalten der optischen Zielnetzwerkeinheit auf einen neuen Schutzwellenlängenkanal.

6. Verfahren zur Steuerung einer optischen Netzwerkeinheit, **dadurch gekennzeichnet, dass** es umfasst:
dass eine optische Zielnetzwerkeinheit Informationen über einen Schutzwellenlängenkanal empfängt, die von einem Endgerät für optischer Leitung gesendet werden, nachdem die optische Zielnetzwerkeinheit als online registriert ist, und die Informationen über den Schutzwellenlängenkanal Informationen über den durch das Endgerät für optischer Leitung eingestellten Schutzwellenlängenkanal für die optische Zielnetzwerkeinheit enthalten, und eine entsprechende Netzwerkressource für die optische Netzwerkeinheit auf einem oder jedem aus einer Vielzahl von Schutzwellenlängenkanälen reserviert, wobei eine optische Netzwerkeinheit mit einer Priorität, die höher als ein bestimmter Prioritätsschwellenwert ist, als optische Zielnetzwerkeinheit durch das Endgerät für optischer Leitung eingestellt wird; und
die optische Zielnetzwerkeinheit das Umschalten auf den Schutzwellenlängenkanal durchführt, wenn eine Notwendigkeit zum Umschalten des Wellenlängenkanals besteht,
wobei ein Wellenlängenkanal durch das Endgerät für optischer Leitung aus einer Vielzahl von Wellenlängenkanälen des Endgeräts für optischer Leitung ausgewählt wird, und wenn durch das Endgerät für optischer Leitung beurteilt wird, dass aktuell verbleibende Netzwerkressourcen des Wellenlängenkanals eine Anforderung der optischen Zielnetzwerkeinheit erfüllen, der Wellenlängenkanal als Schutzwellenlängenkanal ausgewählt wird; andernfalls wird ein nächster Wellenlängenkanal von dem Endgerät für optischer Leitung für die Beurteilung ausgewählt, oder die Beurteilung wird erneut durch das Endgerät für optischer Leitung durchgeführt, nachdem mindestens eine optische Online-Nicht-Zielnetzwerkeinheit von dem Wellenlängenkanal ausgeschlagen wird, oder mindestens eine optische Online-Nicht-Zielnetzwerkeinheit auf dem Wellenlängenkanal auf andere Wellenlängenkanäle umgeschaltet wird.

7. Verfahren nach Anspruch 6, wobei das Verfahren ferner Folgendes umfasst:
dass die optische Zielnetzwerkeinheit eine Nachricht über eine Schutzwellenlängenkanalanomalie an das Endgerät für optischer Leitung sendet, wenn der Schutzwellenlängenkanal anormal ist.

8. Verfahren nach Anspruch 7, wobei die optische Zielnetzwerkeinheit die Nachricht über die Schutzwellenlängenkanalanomalie über eine Verwaltungs- und Steuerschnittstelle der optischen Netzwerkeinheit an das Endgerät für optischer Leitung sendet.

9. Verfahren nach einem der Ansprüche 6-8, **dadurch gekennzeichnet, dass** das Verfahren ferner umfasst:
dass die optische Zielnetzwerkeinheit auf einen gemeinsamen Wellenlängenkanal umgeschaltet wird, wenn alle Schutzwellenlängenkanäle anormal sind.

10. Endgerät (1) für optischer Leitung, **dadurch gekennzeichnet, dass** es umfasst:
ein Einstellmodul (11), das konfiguriert ist, um mindestens zwei Schutzwellenlängenkanäle für eine optische Zielnetzwerkeinheit einzustellen, wobei eine entsprechende Netzwerkressource für die optische Zielnetzwerkeinheit auf einem oder jedem aus einer Vielzahl von Schutzwellenlängenkanälen reserviert ist, wobei eine optische Netzwerkeinheit mit einer Priorität, die höher als ein bestimmter Prioritätsschwellenwert ist, vom Einstellmodul als optische Zielnetzwerkeinheit eingestellt wird; und
ein Sendemodul (12), das konfiguriert ist, um Informationen über die Schutzwellenlängenkanäle an die optische Zielnetzwerkeinheit zu senden, nachdem die optische Zielnetzwerkeinheit als online registriert ist, wobei ein Umschalten auf den Schutzwellenlängenkanal durch die optische Zielnetzwerkeinheit durchgeführt werden kann, wenn eine Notwendigkeit zum Umschalten des Wellenlängenkanals besteht,
wobei das Einstellmodul konfiguriert ist zum: Auswählen eines Wellenlängenkanals aus einer Vielzahl von Wellenlängenkanälen des Endgeräts für optischer Leitung, und wenn durch das Einstellmodul beurteilt wird, dass aktuell verbleibende Netzwerkressourcen des Wellenlängenkanals eine Anforderung der optischen Zielnetzwerkeinheit erfüllen, Auswählen des Wellenlängenkanals als Schutzwellenlängenkanal; andernfalls Auswählen eines nächsten Wellenlängenkanals für die Beurteilung oder erneutes Durchführen der Beurteilung durch das Einstellmodul, nachdem mindestens eine optische Online-Nicht-Zielnetzwerkeinheit von dem Wellenlängenkanal ausgeschlagen wird, oder mindestens eine optische Online-Nicht-Zielnetzwerkeinheit auf dem Wellenlängenkanal auf andere Wellenlängenkanäle umgeschaltet wird.

11. Endgerät für optischer Leitung nach Anspruch 10, wobei das Endgerät für optischer Leitung ferner umfasst:
ein Steuermodul (13), das konfiguriert ist, um, nachdem das Einstellmodul die Schutzwellenlängenkanäle für die optische Zielnetzwerkeinheit eingestellt hat, und wenn die optische Zielnetzwerkeinheit als online registriert ist, die als auf dem Schutzwellenlängenkanal als online zu registrierende optische Zielnetzwerkeinheit zu steuern;
oder,
nachdem die optische Zielnetzwerkeinheit als online registriert ist, und wenn der Wellenlängenkanal, auf dem die optische Zielnetzwerkeinheit aktuell positioniert ist, kein Schutzwellenlängenkanal ist, Steuern der optischen Zielnetzwerkeinheit dahingehend, dass sie auf den Schutzwellenlängenkanal umgeschaltet wird.

12. Optisches Netzwerksystem, umfassend das Endgerät (1) für optischer Leitung nach Anspruch 10 oder 11 und eine optische Netzwerkeinheit (2), umfassend:
ein Empfangsmodul (21), das konfiguriert ist, um Informationen über einen Schutzwellenlängenkanal zu empfangen, der von einem Endgerät für optischer Leitung gesendet wird, nachdem die optische Netzwerkeinheit als online registriert ist, wobei die Informationen über den Schutzwellenlängenkanal Informationen über den Schutzwellenlängenkanal enthalten, der durch das Endgerät für optischer Leitung für die optische Zielnetzwerkeinheit eingestellt ist, und eine entsprechende Netzwerkressource für die optische Netzwerkeinheit auf dem Schutzwellenlängenkanal reserviert ist, wobei eine optische Netzwerkeinheit mit einer Priorität, die höher als ein bestimmter Prioritätsschwellenwert ist, durch das optische Leitungsendgerät als die optische Zielnetzwerkeinheit eingestellt wird; und
ein Schaltmodul (22), das konfiguriert ist, um das Umschalten auf den Schutzwellenlängenkanal durchzuführen, wenn eine Notwendigkeit zum Umschalten des Wellenlängenkanals besteht,
wobei ein Wellenlängenkanal durch das Endgerät für optischer Leitung aus einer Vielzahl von Wellenlängenkanälen des Endgeräts für optischer Leitung ausgewählt wird, und wenn durch das Endgerät für optischer Leitung beurteilt wird, dass aktuell verbleibende Netzwerkressourcen des Wellenlängenkanals eine Anforderung der optischen Zielnetzwerkeinheit erfüllen, der Wellenlängenkanal als Schutzwellenlängenkanal ausgewählt wird; andernfalls wird ein nächster Wellenlängenkanal von dem Endgerät für optischer Leitung für die Beurteilung ausgewählt, oder die Beurteilung wird erneut durch das Endgerät für optischer Leitung durchgeführt, nachdem mindestens eine optische Online-Nicht-Zielnetzwerkeinheit von dem Wellenlängenkanal ausgeschlagen wird, oder mindestens eine optische Online-Nicht-Zielnetzwerkeinheit auf dem Wellenlängenkanal auf andere Wellenlängenkanäle umgeschaltet wird.

## Revendications

1. Procédé de commande d'une unité de réseau optique, **caractérisé en ce que** ledit procédé comprend :
la définition par un terminal de ligne optique d'un canal de longueur d'onde de protection pour une unité de réseau optique cible, et la réservation d'une ressource de réseau correspondante pour l'unité de réseau optique cible sur le canal de longueur d'onde de protection (S201), une unité de réseau optique présentant une priorité supérieure à un certain seuil de priorité étant définie en tant qu'unité de réseau optique cible par le terminal de ligne optique ; et
l'envoi par le terminal de ligne optique des informations sur le canal de longueur d'onde de protection à l'unité de réseau optique cible (S203) après que l'unité de réseau optique cible a été enregistrée pour être en ligne (S202), l'unité de réseau optique cible effectuant une commutation sur le canal de longueur d'onde de protection lorsqu'une commutation du canal de longueur d'onde (S204) est nécessaire,
l'étape de définition par le terminal de ligne optique du canal de longueur d'onde de protection pour l'unité de réseau optique cible comprenant :
la sélection par le terminal de ligne optique d'un canal de longueur d'onde parmi une pluralité de canaux de longueur d'onde du terminal de ligne optique, et, lorsqu'il juge que les ressources de réseau restantes actuelles du canal de longueur d'onde satisfont une demande de l'unité de réseau optique cible, la sélection du canal de longueur d'onde en tant que canal de longueur d'onde de protection ; si ce n'est pas le cas, la sélection par le terminal de ligne optique d'un canal de longueur d'onde suivant pour le jugement, ou la réitération par le terminal de ligne optique du jugement après avoir exclu au moins une unité de réseau optique non-cible en ligne à partir du canal de longueur d'onde ou la commutation d'au moins une unité de réseau optique non-cible en ligne sur le canal de longueur d'onde vers d'autres canaux de longueur d'onde.

2. Procédé selon la revendication 1, dans lequel le terminal de ligne optique définit deux canaux de longueur d'onde de protection pour l'unité de réseau optique cible, et
après que les deux canaux de longueur d'onde de protection ont été définis, ledit procédé comprend en outre :
lorsque l'unité de réseau optique cible est enregistrée pour être en ligne, la commande par le terminal de ligne optique de l'unité de réseau optique cible à enregistrer pour être en ligne sur l'un des canaux de longueur d'onde de protection ;
ou,
après que l'unité de réseau optique cible a été enregistrée pour être en ligne, et lorsqu'un canal de longueur d'onde sur lequel l'unité de réseau optique cible est actuellement située n'est pas un canal de longueur d'onde de protection, la commande par le terminal de ligne optique de l'unité de réseau optique cible à commuter sur un des canaux de longueur d'onde de protection.

3. Procédé selon l'une quelconque des revendications 1 à 2, dans lequel la ressource de réseau comprend une ressource de bande passante et/ou une ressource de réseau de qualité de service.

4. Procédé selon l'une quelconque des revendications 1 à 2, dans lequel ledit procédé comprend en outre :
la réception par le terminal de ligne optique d'un message d'anomalie de canal de longueur d'onde de protection renvoyé par l'unité de réseau optique cible ; et
la redéfinition, lorsque tous les canaux de longueur d'onde de protection sont anormaux, par le terminal de ligne optique d'au moins un canal de longueur d'onde de protection pour l'unité de réseau optique cible.

5. Procédé selon la revendication 4, ledit procédé comprenant en outre :
après que le terminal de ligne optique a redéfini au moins un canal de longueur d'onde de protection pour l'unité de réseau optique cible, la commutation de l'unité de réseau optique cible sur un nouveau canal de longueur d'onde de protection.

6. Procédé de commande d'une unité de réseau optique, **caractérisé en ce que** ledit procédé comprend :
la réception par une unité de réseau optique cible des informations sur un canal de longueur d'onde de protection envoyées par un terminal de ligne optique après que l'unité de réseau optique cible a été enregistrée pour être en ligne, et les informations sur le canal de longueur d'onde de protection contiennent des informations sur le canal de longueur d'onde de protection défini par le terminal de ligne optique pour l'unité de réseau optique cible, et la réservation d'une ressource de réseau correspondante pour l'unité de réseau optique sur un ou chaque canal d'une pluralité de canaux de longueur d'onde de protection, une unité de réseau optique présentant une priorité supérieure à un certain seuil de priorité étant définie en tant qu'unité de réseau optique cible par le terminal de ligne optique ; et
la réalisation par l'unité de réseau optique cible de la commutation sur le canal de longueur d'onde de protection lorsqu'une commutation du canal de longueur d'onde est nécessaire,
un canal de longueur d'onde étant sélectionné par le terminal de ligne optique parmi une pluralité de canaux de longueur d'onde du terminal de ligne optique, et lorsqu'il est jugé par le terminal de ligne optique que les ressources de réseau restantes actuelles du canal de longueur d'onde satisfont une demande de l'unité de réseau optique cible, le canal de longueur d'onde étant sélectionné en tant que canal de longueur d'onde de protection ; si ce n'est pas le cas, un canal de longueur d'onde suivant est sélectionné par le terminal de ligne optique pour le jugement, ou le jugement est réitéré par le terminal de ligne optique après qu'au moins une unité de réseau optique non-cible en ligne a été exclue du canal de longueur d'onde ou l'au moins une unité de réseau optique non-cible en ligne sur le canal de longueur d'onde est commutée sur d'autres canaux de longueur d'onde.

7. Procédé selon la revendication 6, ledit procédé comprenant en outre :
l'envoi par l'unité de réseau optique cible d'un message d'anomalie de canal de longueur d'onde de protection au terminal de ligne optique lorsque le canal de longueur d'onde de protection est anormal.

8. Procédé selon la revendication 7, dans lequel l'unité de réseau optique cible envoie le message d'anomalie de canal de longueur d'onde de protection au terminal de ligne optique par l'intermédiaire d'une interface de gestion et de commande de l'unité de réseau optique.

9. Procédé selon l'une quelconque des revendications 6 à 8, ledit procédé comprenant en outre :
la commutation de l'unité de réseau optique cible sur un canal de longueur d'onde commun lorsque tous les canaux de longueur d'onde de protection sont anormaux.

10. Terminal de ligne optique (1), **caractérisé en ce que** ledit terminal comprend :
un module de réglage (11) conçu pour définir au moins deux canaux de longueur d'onde de protection pour une unité de réseau optique cible, dans lequel une ressource de réseau correspondante est réservée pour l'unité de réseau optique cible sur un ou chaque canal d'une pluralité de canaux de longueur d'onde de protection, une unité de réseau optique présentant une priorité supérieure à un certain seuil de priorité étant définie en tant qu'unité de réseau optique cible par le module de réglage ; et
un module d'envoi (12) conçu pour envoyer des informations sur les canaux de longueur d'onde de protection à l'unité de réseau optique cible après que l'unité de réseau optique cible a été enregistrée pour être en ligne, une commutation sur le canal de longueur d'onde de protection pouvant être réalisée par l'unité de réseau optique cible lorsqu'il est nécessaire de changer de canal de longueur d'onde,
le module de réglage étant conçu : pour sélectionner un canal de longueur d'onde parmi une pluralité de canaux de longueur d'onde du terminal de ligne optique, et, lorsqu'il est jugé par le module de réglage que les ressources de réseau restantes actuelles du canal de longueur d'onde satisfont une demande de l'unité de réseau optique cible, pour sélectionner le canal de longueur d'onde en tant que canal de longueur d'onde de protection ; si ce n'est pas le cas, pour sélectionner un canal de longueur d'onde suivant pour le jugement, ou pour réitérer le jugement par le module de réglage après qu'au moins une unité de réseau optique non-cible en ligne du canal de longueur d'onde a été exclue ou au moins une unité de réseau optique non-cible en ligne sur le canal de longueur d'onde est commutée sur d'autres canaux de longueur d'onde.

11. Terminal de ligne optique selon la revendication 10, ledit terminal de ligne optique comprenant en outre :
un module de commande (13) conçu pour commander, après que le module de réglage a défini les canaux de longueur d'onde de protection pour l'unité de réseau optique cible, et lorsque l'unité de réseau optique cible est enregistrée pour être en ligne, l'unité de réseau optique cible à enregistrer pour être en ligne sur le canal de longueur d'onde de protection ;
ou,
après que l'unité de réseau optique cible a été enregistrée pour être en ligne, et lorsque le canal de longueur d'onde sur lequel l'unité de réseau optique cible est actuellement située n'est pas un canal de longueur d'onde de protection, pour commander l'unité de réseau optique cible à commuter sur le canal de longueur d'onde de protection.

12. Système de réseau optique, comprenant le terminal de ligne optique (1) selon la revendication 10 ou 11 et une unité de réseau optique (2) comprenant :
un module de réception (21) conçu pour recevoir des informations sur un canal de longueur d'onde de protection envoyées par un terminal de ligne optique après que l'unité de réseau optique est enregistrée pour être en ligne, les informations sur le canal de longueur d'onde de protection contenant des informations sur le canal de longueur d'onde de protection défini par le terminal de ligne optique pour l'unité de réseau optique cible, et une ressource de réseau correspondante est réservée pour l'unité de réseau optique sur le canal de longueur d'onde de protection, une unité de réseau optique présentant une priorité supérieure à un certain seuil de priorité étant définie en tant qu'unité de réseau optique cible par le terminal de ligne optique ; et
un module de commutation (22) conçu pour effectuer la commutation sur le canal de longueur d'onde de protection lorsqu'une commutation de canal de longueur d'onde est nécessaire,
un canal de longueur d'onde étant sélectionné par le terminal de ligne optique parmi une pluralité de canaux de longueur d'onde du terminal de ligne optique, et lorsqu'il est jugé par le terminal de ligne optique que les ressources de réseau restantes actuelles du canal de longueur d'onde satisfont une demande de l'unité de réseau optique cible, le canal de longueur d'onde étant sélectionné en tant que canal de longueur d'onde de protection ; si ce n'est pas le cas, un canal de longueur d'onde suivant est sélectionné par le terminal de ligne optique pour le jugement, ou le jugement est réitéré par le terminal de ligne optique après qu'au moins une unité de réseau optique non-cible en ligne a été exclue du canal de longueur d'onde ou au moins une unité de réseau optique non-cible en ligne sur le canal de longueur d'onde est commutée sur d'autres canaux de longueur d'onde.
